# EUROPEAN PATENT APPLICATION

(11) **EP 1 348 333 A2**
(43) Date of publication of application: **01.10.2003**
(21) Application number: 03076788.3
(22) Date of filing: 03.03.1999
(51) Int. Cl.: A01J 5/08

(54) **A milking member**

(30) Priority: 23.03.1998 NL 1008671
(62) Divisional of application: 99200604.9
(71) Applicant: MAASLAND N.V., 3155 PD Maasland (NL)
(72) Inventor: van den Berg, Karel, 2971 BR Bleskensgraaf (NL)

(57) **Abstract**

A milking member for milking a teat of an animal to be milked, which milking member comprises a teat cup (1) that is connectable to a milk line (4), which teat cup is provided with a flexible, deformable liner (2) which is adapted to be alternately squeezed and reopened by means of changes in pressure to be realized by a pulsation line (5) that can also be connected to the teat cup (1). The space between the outer wall of the teat cup (1) and the liner (2) is partially filled with a filling material (12).

## Description

The invention relates to a milking member according to the preamble of claim 1. The invention further relates to a milking robot provided with such a milking member.

Such a milking member is known.

It is an object of the invention to improve such a milking member.

In accordance with the invention this is achieved by the features of claim 1. As a result the amount of fluid required for the pressure increase is smaller so that a smaller pulsation line will suffice.

According to a further inventive feature, the filling material consists predominantly of a soft material, such as foam rubber or a soft synthetic material. According to a still further inventive feature, the filling material is porous.

According to the invention the milking member can be applied in a very advantageous manner in an automatic milking implement or milking robot in which, of course, milking members are used intensively and almost continuously. The prevention of wear is of major importance in such an implement.

The invention will now be explained in further detail with reference to the accompanying drawings.
Figure 1 is a schematic longitudinal section of a first embodiment of the milking member;
Figure 2 is a schematic cross section of the milking member of Figure 1 taken on the line II - II;
Figure 3 is a schematic longitudinal section of a second embodiment of the milking member according to the invention;
Figure 4 is a schematic cross section of the milking member of Figure 3 taken on the line IV - IV;
Figure 5 is a schematic longitudinal section of a third embodiment of the milking member;
Figure 6 is a schematic cross section of the milking member of Figure 5 taken on the line VI - VI, and
Figure 7 is a schematic cross section of a fourth embodiment of the milking member.

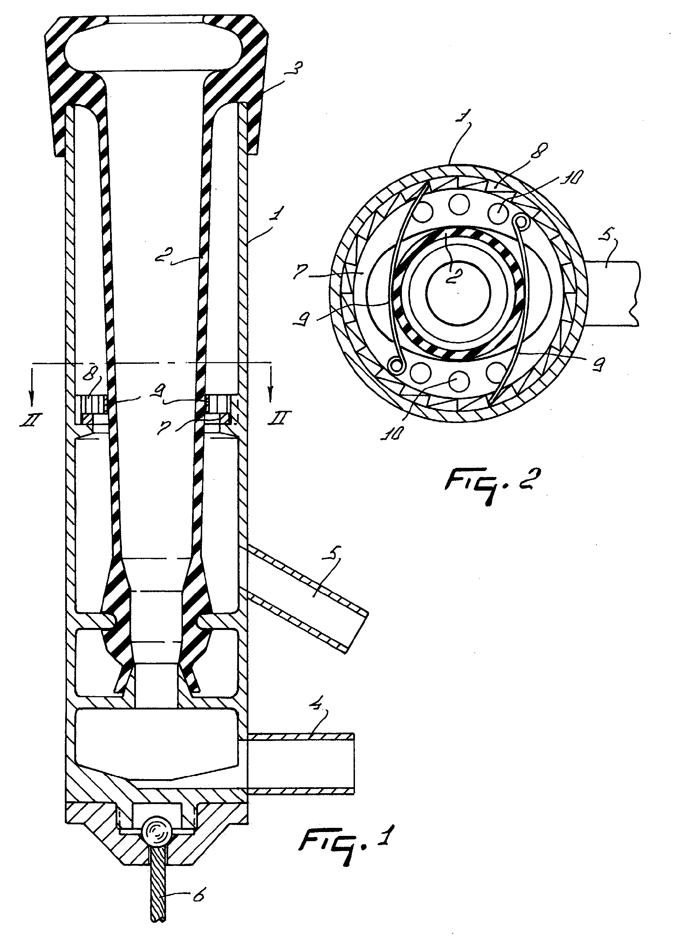

Figure 1 shows a schematic longitudinal section of a first embodiment of the milking member according to the invention. The milking member comprises a teat cup 1 for collecting and conveying the milk yielded, which teat cup 1 consists e.g. of metal or synthetic material and whose inner side is provided with a liner 2 whose upper side is connected to the teat cup 1 via a nozzle 3. The teat cup 1 is connected to a milk line 4 in which there is a permanent vacuum. Via this vacuum line 4 the milk is discharged from the teat cup 1 in order to be processed further. A pulsation line 5 is also connected to the teat cup 1 and is adapted to realize changes in pressure in the space between the outer wall of the teat cup 1 and the liner 2, by means of which at milking the flexible, deformable liner 2 repeatedly collapses or is squeezed in a release phase and is reopened in a subsequent suction phase. The teat cup 1 is further connected to a non-shown milking cluster or a robot arm via positioning means 6 known per se. The liner 2 is e.g. made of rubber and is substantially cylindrical or slightly conical.

At squeezing or collapsing, by deformation of the flexible liner 2 there are formed kinking points or places, i.e. parts of the liner 2 where a sharp twist or bend in the material is formed. In the situation of an approximately cylindrical liner 2, there will be formed two kinking places that are located approximately diametrically opposite each other on the circumference of the liner. Without further measures being taken the liner 2 would tend to form these kinking points each time at the same spots, which leads to early wear. According to the invention the milking member is provided with means for influencing the positions on the circumference of the liner 2 of kinking places which are formed in the liner 2 when it is squeezed. With the aid of these means, which will be further detailed in the following, the positions of the kinking points which are formed on the circumference of the liner 2 when it is squeezed can be altered. Altering each time the positions of the kinking places (i.e. changing the direction in which the liner 2 is squeezed) prevents the kinking places from being formed each time at the same spots.

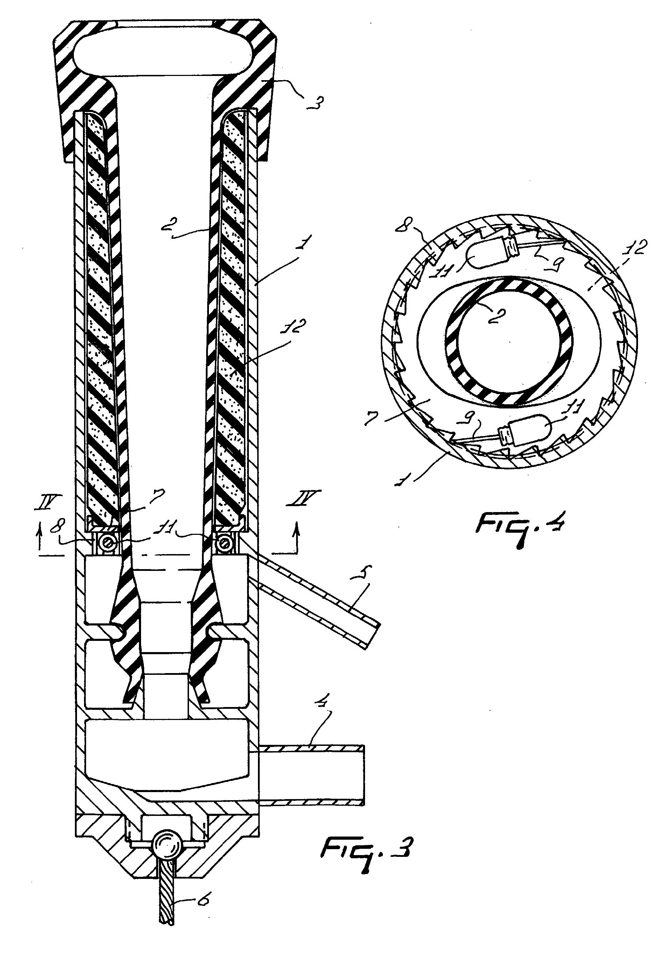

Figure 2 is a schematic cross section of the milking member of Figure 1 taken on the line II - II. In the embodiment of Figures 1 and 2 the means comprise a disc 7 which is provided in its centre with an oval or elongated aperture. The means are further adapted to rotate said disc 7 periodically. For that purpose the means comprise a toothing 8 that is rigidly connected to the teat cup 1, as well as at least one pushing element 9 that is connected to the disc 7 and cooperates with the toothing 8. In the embodiment shown there are two pushing elements 9. The pushing elements 9 are each constituted by a resilient pin or strip (such as a leaf spring) , whose one end is connected to the disc 7 and whose other end extends into the toothing 8.

The pin or strip 9 is adapted, at squeezing of the liner 2, to be deformed by said liner substantially perpendicular to the longitudinal direction of the pin or strip and thus to be put under tension. From the position of Figure 2, when being squeezed the liner 2 will bulge to the left and the right, so that the pushing elements 9 will be somewhat more curved and thus slightly be put under tension, while the end extending into the toothing 8 each time moves up a tine. When subsequently the liner reassumes the form and position shown in Figure 2, the pin or strip 9 will release, so that the disc 7 is rotated somewhat in the direction of the arrow shown in Figure 2. In a next suction phase the process is repeated, so that the disc 7 is each time rotated further. Of course, the oval aperture in the disc 7 rotates along, so that the direction in which the liner 2 is allowed to bulge each time changes. Around its central aperture the disc 7 is furthermore provided with apertures 10 for air transmission.

With the aid of the described construction the positions of the kinking places in the liner 2 are altered periodically (each time before a suction phase). In this manner not only the load of the material of the liner 2 is spread efficiently, but milking a teat will also entail a stimulating, massaging effect because the teat is slightly squeezed by the liner 2, each time from an other direction.

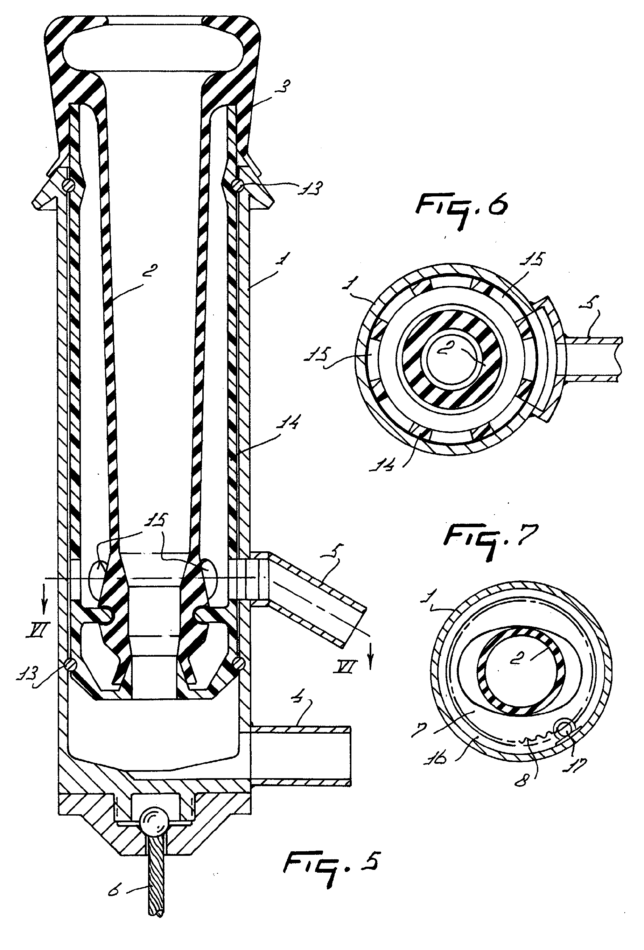

Figure 3 is a schematic longitudinal section of a second embodiment according to the invention of the milking member and Figure 4 is a schematic cross section of the milking member of Figure 3 taken on the line IV - IV. The disc 7 provided with an oval aperture again comprises two pushing elements 9 which are now each constituted by a casing fixed on the disc 7 and accommodating a closed bellows or balloon 11 one end of which is provided with a slightly resilient pin or strip (such as a leaf spring) whose end extends into the toothing 8 that is rigidly connected to the teat cup 1.

The bellows 11 is adapted to move the pin or strip substantially in longitudinal direction under the influence of the changes in pressure caused by the pulsation line 5. From the position shown in Figure 4, at increasing the pressure with the aid of the pulsation line 5, not only the liner 2 will collapse, but the bellows 11 will withdraw the pin or strip 9 whose end will be inserted into a next tine of the toothing 8 because of the slightly resilient effect of the pin or strip. When, at decreasing the pressure the liner 2 subsequently reassumes the form and position shown in Figure 4, the pressure in the bellows 11 will ensure that the pin or strip 9 will be stretched out again, so that the disc 7 is rotated somewhat in the direction of the arrow shown in Figure 4. In a next suction phase this process is repeated, so that the disc 7 is each time rotated further. Of course, the oval aperture in the disc 7 rotates along, so that the direction in which the liner 2 can bulge each time changes. Around its central aperture the disc 7 may again be provided with apertures 10 for air transmission.

The space between the outer wall of the teat cup 1 and the liner 2 can partially be filled with a filling material 12. Consequently the amount of fluid required for the increase and decrease of pressure is smaller, so that a smaller pulsation line 5 will suffice. Preferably the filling material 12 consists substantially of a soft material, such as foam rubber or a soft synthetic material. The filling material 12 may also be porous.

Figure 5 is a schematic longitudinal section of a third embodiment of the milking member and Figure 6 is a schematic cross section of the milking member of Figure 5 taken on the line VI - VI. In this embodiment the means comprise an intermediate casing 14 which is rotatably bearing-supported in the teat cup 1 with the aid of bearings 13 and which is rotatable as a whole, e.g. by means of a (non-shown) cleaning device which is connectable to the nozzle 3 of the teat cup 1. At the level of the connection of the pulsation line 5 the intermediate casing 14 is provided on all sides with apertures 15, so that the space between the liner 2 and the intermediate casing 14 is constantly in connection with the pulsation line 5. Consequently, in this embodiment the liner 2 is rotated as a whole at each cleaning run, so that the position of the kinking places which are formed is influenced. Of course, also in this situation the space between the intermediate casing 14 and the liner 2 can partially be filled with a filling material 12.

Figure 7 is a schematic cross section of a fourth embodiment of the milking member. In this embodiment it is possible to determine at random where the kinking places of the liner 2 will be formed. In the cross section of Figure 7 there is shown a teat cup 1 which roughly equals the teat cup 1 represented in Figure 3. The teat cup 1 comprises a bearing edge 16 on which a disc 7 provided with an oval aperture is rotatably disposed. The disc 7 comprises a toothing 8 that engages with a gear wheel of a motor 17 and is rigidly connected to the liner of the teat cup 1. In this situation the motor 17 can be designed e.g. as an electric motor or a pneumatic motor. During operation there is determined a value by means of a (non-shown) random generator, which value corresponds to a certain period of time during which the motor 17 is energized. Depending on the time during which the motor 17 is energized, the disc 7 will undergo a certain angular rotation. The value each time being determined at random, it is never certain where the kinking places of the liner 2 will be formed. With the latter measure it is achieved that the animal does not get accustomed to a certain rhythm in the formation of the kinking places. Determining the kinking place at random has the advantage that the teat is additionally stimulated.

## Claims

1. A milking member for milking a teat of an animal to be milked, which milking member comprises a teat cup (1) that is connectable to a milk line (4), which teat cup is provided with a flexible, deformable liner (2) which is adapted to be alternately squeezed and reopened by means of changes in pressure to be realized by a pulsation line (5) that can also be connected to the teat cup (1), **characterized in that** the space between the outer wall of the teat cup (1) and the liner (2) is partially filled with a filling material (12).

2. A milking member as claimed in claim 1, **characterized in that** the space between the outer wall of the teat cup (1) and the liner (2) is partially filled with a filling material (12).

3. A milking member as claimed in claim 1 or 2, **characterized in that** the filling material (12) consists predominantly of a soft material, such as foam rubber or a soft synthetic material.

4. A milking member as claimed in any one of claims 1 - 3, **characterized in that** the filling material (12) is porous.

5. A milking robot provided with a milking member as claimed in any one of claims 1 - 4.
